# EUROPEAN PATENT APPLICATION

(11) **EP 2 631 867 A1**
(43) Date of publication of application: **28.08.2013**
(21) Application number: 11834135.3
(22) Date of filing: 09.09.2011
(51) Int. Cl.: G06Q 50/00, G06Q 10/00

(54) **CABLE CONSTRUCTION ASSISTANCE/MANAGEMENT SYSTEM**

(30) Priority: 19.10.2010 JP 2010234581
(71) Applicant: Hitachi Plant Technologies, Ltd., Tokyo 170-8466 (JP)
(72) Inventor: FUJITA Hirotaka, Tokyo 170-8466 (JP); FUKUI Kou, Tokyo 170-8466 (JP); SAKATA Sozo, Tokyo 170-8466 (JP)
(74) Representative: Beetz & Partner
(86) International application number: PCT/JP2011/070617
(87) International publication number: WO 2012/053293

(57) **Abstract**

Operation information which is provided from a construction DB server, assists an operation relating to a cable to which the operation is allowed, and is previously associated with a cable ID, is downloaded to a PDA which an operator carries. An RFID tag reader of a PDA is used to read information of an RFID integrated with a name indication card attached to a helmet possessed by the operator, and to read a cable ID of a cable from an index seal provided with an RFID and attached to an end of the cable. On the basis of the cable ID, operation information regarding the corresponding cable is acquired from among the downloaded operation information, and is displayed on a display means of the PDA. Each operator works with reference to operation assistance information displayed on the display means of the PDA, and when the operation is finished, RFID information of the operator is recorded again, to perform an association between the operation and the operation information at different times, and thereby, increase the reliability regarding history management.

## Description

### Technical Field

The present invention relates to a cable construction assistance/management system, particularly relates to a technology of assisting and managing a construction of laying an electric cable at a large-sized plant equipment or the like.

### Background Art

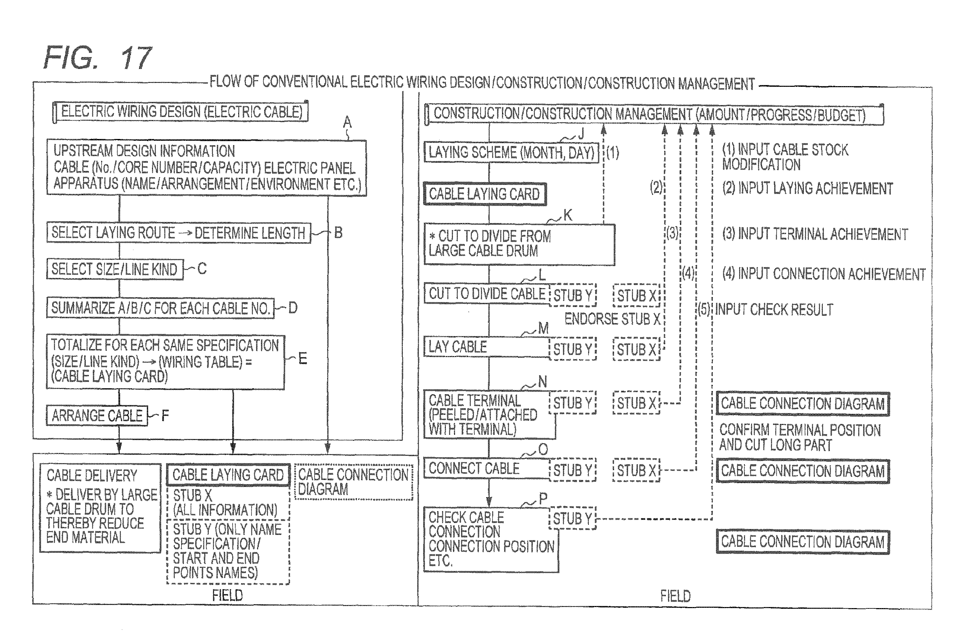

Fig. 17 is a diagram showing a flow of a conventional cable design construction management. As shown in the drawing, information necessary for each cable is summarized based on upstream design information at a part of an electric wiring design (step A). A cable length is determined by selecting a laying route (point number of cable tray (cable rack) of laying cable) (step B), and a size/a line kind or the like of the cable is selected (step C). Further, processings of steps A, B, and C are carried out for each cable number (step D).

At step E, information of names of start and end points/laying route (point number of cable tray etc., number of passing conduit tube etc.) are prepared other than the size/the line kind/a length/a core number of the cable, and the tabulated information is referred to as a wiring table. Arrangement of the cable is carried out based on the wiring table (step F).

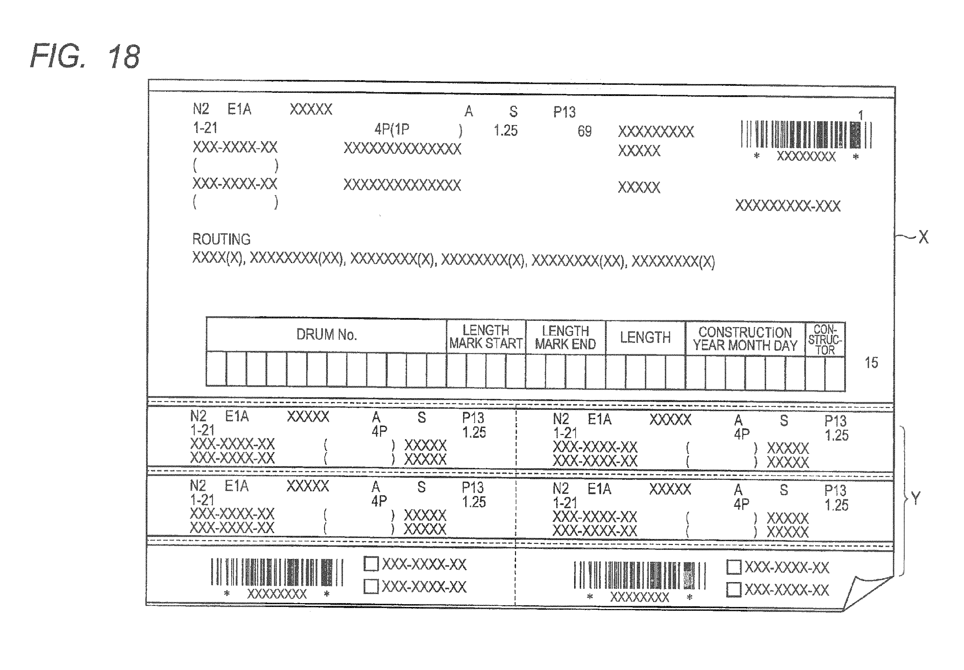

Also, a card which is used for instruction of a laying operation/delivery and receipt of information is printed for each cable based on the wiring table. The card is referred to as a cable laying card. As shown in Fig. 18, the cable laying card includes a part (stub X) in which all of information is printed, and parts (stubs Y) which are to be cut to separate by perforations, and pasted on both ends of the cable to be laid, and stubs Y are used for marks of laying and terminal/connection.

At a part of construction/construction management on the spot, a desired cable is cut and divided from a cable drum based on information recorded on the cable laying card (step K), and the stubs Y which are cut to be separated from the stub X are pasted on both ends of the cable which is cut and divided (step L).

Next, the cable which is pasted with the stubs Y is laid in line with a laying route which is printed on the stub X (step M). A back face of the stub X is printed with a laying check table by which a confirmation check is carried out after the laying operation. Successively, a processing (peeling, terminal attaching) of the cable terminal is carried out (step N), thereafter, the cable is connected to a panel or a terminal board (step O).

Cable connecting position information to an apparatus or an electric panel or the like which is necessary for operations at the steps N and O is acquired from a connection diagram which is formed based on a sequence diagram, and an operator carries out a connecting operation while looking at the connection diagram. The operator attaches a check mark on recording paper after confirming that the connection position is as shown in the drawing after the connection (step P).

A manager collates the connection diagram and the connected wiring, confirms that the correct operation have been carried out, thereafter, makes a sign indicating configuration of the manager on the recording paper.

Also, there is proposed a cable laying management system in which conventionally data necessary for a cable laying operation management (for example, data which is necessary for a cable laying operation of an article name, a standard, a size, a total length and the like of the cable) is displayed on the cable by a bar code, and the bar code is read via a bar code reader, and inputted to an information processing unit (Patent Literature 1). Further, there is proposed a system of specifying a cable by using RFID in place of the bar code (Patent Literature 2).

### Citation List

### Patent Literature

Patent Literature 1: Japanese Patent Application Laid-Open Publication No. Hei 5(1993)-161224
Patent Literature 2: Japanese Patent Application Laid-Open Publication No. 2008-171186

### Summary of Invention

### Technical Problem

According to the conventional cable design construction management system shown in Fig. 17, the connection diagram and the recording paper are used, and therefore, soundness of the operation cannot be confirmed by itself, further, both of the connection diagram and the recording paper are made of paper, and there is a drawback that an electronic configuration is difficult to construct in constructing a traceability system of the operation (retrieval from described information cannot be carried out by a system of scanning paper).

Further, an operation of detaching or recovering a wiring in testing or the like is managed by using a sheet of paper which is different from the recording paper of the operator who has carried out an original connection, and therefore, there is a drawback that not only a time delay until the newest connection situation is grasped is always brought about, but a value of a consistency of operation as an operation record is deteriorated since the sheets of recording paper are different. Further, in a case where a progress and a budget management of operation or the like are carried out from an operation processing situation of laying/terminal/connection, in a case where remainder material confirmation/stock confirmation or the like of the cable which has been cut and divided is carried out, information is scattered at respective locations of steps, and therefore, there is a drawback that an error by a time delay is always liable to be brought about.

On the other hand, although in Patent Literature 1, there is a description that necessary data is inputted to an information processing unit without human error by reading the bar code (data necessary for cable laying operation management) which is displayed on the cable, or a description that an operation of laying the cable is investigated and managed based on the inputted data, there is not a description of assisting a cable laying operation on the spot, or managing the newest connection situation or the like.

Further, in Patent Literature 2, there is carried out a trial of achieving assistance of a cable laying operation from a design department to respective operators on the spot by using RFID in place of a bar code, human resource saving and acceleration of an operation and a confirming operation by an electronic configuration of a record confirming an end of the operation, and achieving a promotion of a reliability of an authentification of an operator, a permittance of the operation, a report of an operation result, a report of checking and the like. However, there is not a function of preventing an illegal operation which is carried out by disguising an operator who is not permitted to operate (or who does not have public qualification) as a permitted operator, and there remains a room of improving security in view of a system.

The present invention has been carried out in view of such a situation, and it is an object thereof to provide a cable construction/management system which achieves human resource saving and acceleration of operation and has a high security preventing an illegal operation of an unpermitted person by displaying operation information based on a coincidence of an operator ID which is carried by an operator and a permitter ID of an operation which is downloaded from a server.

A reliability of an operation and a consistency of a history management can be achieved by integrally pasting RFID recording operator information (presence or absence of permittance of a cable connecting operation, presence or absence of a qualification other than information of a name display card) on the name display card which displays information of a company name, a name of person, an operation qualification, a blood type or the like which is pasted on a helmet that is distributed to an individual operator on the operation spot, reading the operator information by an RFID reader which is provided to PDA when the operation is started and when the operation is finished and recording the operator information.

### Solution to Problem

In order to achieve the above-described object, an invention according to Claim 1 is characterized in a cable construction assistance/management system including a portable terminal which an operator carries, and a server for exchanging a piece of necessary information with the portable terminal via a network, and assisting an operation of connecting a cable attached with a cable laying card recorded with a piece of original cable identification information along a previously designed route;
wherein the portable terminal including:
operator reading means for reading a piece of operator information from an operator authentification card recorded with the piece of operator information including an operator ID pasted on a helmet of the operator who carries out the operation;
first storage means for storing the piece of read operator information;
cable reading means for reading the piece of cable identification information from the cable laying card;
second storage means for downloading to store a piece of assistance information of assisting an operation of an operation permittance cable provided from the server and a piece of operation information including the piece of operator information including a permitter ID with regard to an operation permitter previously in association with the piece of cable identification information;
operation information acquiring means for acquiring the piece of operation information for the corresponding cable from the second storage means based on the piece of cable identification information read by the cable reading means;
collation means for outputting a piece of display permittance information in a case of comparing the operator ID of the piece of operator information stored to the first storage means with the permitter ID of the piece of operator information stored to the second storage means to coincide with each other; and
display means for displaying the piece of operation information acquired by the operation information acquiring means by the piece of display permittance information; and wherein the server includes:
   third storage means for storing the piece of assistance information of assisting the operation of each cable laid in the facility and the piece of operator information including the permitter ID with regard to the operation permitter in association with each piece of cable identification information:
      extraction means for extracting the piece of operation information of the corresponding cable from the third storage means from the third storage means in accordance with a request for downloading from the portable terminal; and
      operation information providing means for providing the piece of operation information extracted by the extraction means to the portable terminal along with the piece of cable identification information.

That is, each operator downloads the operation information which assists the operation for the operation permittance cable that is provided from the server, and the operation information which is previously associated with the cable identification information to the portable terminal which each operator per se carries.
Further, each operator reads the cable identification information of the cable from the cable laying card which is attached to an end portion of the cable by using the reading means of the portable terminal, acquires the operation information for the corresponding cable from the downloaded operation information based on the cable identification information, and reads the operator ID with regard to the operator per se from the operator authentification card which is attached to the helmet of the operator per se, collates the operator ID with the operation permitter ID that is included in the operation information, and displays the operation information on the display means of the portable terminal only in a case where the operator ID and the operation permitter ID coincide with each other. Thereby, each operation can carry out a necessary operation while looking at the operation information which is displayed on the display means.

The invention according to Claim 2 is characterized in a cable construction assistance/management system including a portable terminal which an operator carries, and a server of exchanging a piece of necessary information with the portable terminal via a network, and assisting an operation of connecting a cable attached with a cable card recorded with a piece of original cable identification information along a previously designed route; wherein the portable terminal includes:
operator reading means for reading a piece of operator information from an operator authentification card stored with the piece of operator information including an operator ID pasted on a helmet of the operator who carries out the operation;
first storage means for storing the piece of read operator information;
cable reading means for reading the piece of cable identification information from the cable card;
operation information acquiring means for acquiring a piece of assistance information with regard to an operation of the corresponding cable and the piece of operator information including a permitter ID of permitting the operation based on the piece of cable identification information read by the cable reading means;
collation means for outputting a piece of display permittance information in a case of comparing the operator ID stored to the first storage means with the permitter ID acquired by the operator information acquiring means to coincide with each other; and
display means for displaying the piece of acquired operation information by the operation information acquiring means by the piece of display permittance information from the collation means; and
wherein the server includes:
   third storage means for storing the piece of assistance information of assisting the operation of each cable laid in the facility and the piece of operation information having the permitter ID with regard to the operation permitter in association with each piece of cable identification information;
   extraction means for extracting, from the third storage means, the operation information of the corresponding cable based on the piece of cable identification information received from the portable terminal; and
   operation information providing means for providing the piece of operation information extracted by the extraction means to the portable terminal.

Although in the invention according to Claim 1, the operator first downloads the operation information which assists the operation for the operation permittance cable from the server, the invention according to Claim 2 differs from the invention according to Claim 1 in that when the operator reads the cable identification information from the cable laying card which is attached to the cable by using the cable reading means of the portable terminal, the operator acquires the operation information of the corresponding cable based on the read cable identification information from the server.

As shown in Claim 3, there is provided the cable construction assistance/management system according to Claim 1 or 2, wherein the cable laying cards are attached to both end portions of the cable, and the cable laying cards of the respective end portions are recorded with the pieces of cable identification information different from each other. There are a number of cases where the both ends of the cable are connected to panels or terminal boards of kinds which are different from each other, and the operation information with regard to the connection of each end portion of the cable can be acquired.

As shown in Claim 4, there is provided the cable construction assistance/management system according to any one of Claims 1 through 3, wherein the cable laying card is a card embedded with an RFID tag, or a card printed with a bar code, and the cable reading means of the portable terminal is an RFID tag reader or a bar code reader.
As shown in Claim 5, there is provided the cable construction assistance/management system according to any one of Claims 1 through 4, wherein the portable terminal inputs the piece of operator information by the operator reading means at least as a piece of authentification information of the operator for receiving a permittance of access to the server. Thereby, illegal access can be prevented, and only the operation information which is necessary for the operator can also be transmitted in accordance with an access authority of the operator who makes access.

As shown in Claim 6, there is provided the cable construction assistance/management system according to Claim 5, wherein the piece of operator information of the operator is recorded to the RFID tag embedded to an operator authentification card of each operator, the RFID is integrated with a name display card pasted on the helmet owned by the operator, and the operator reading means is an RFID tag reader. Incidentally, RFID and the name display card are integrated, since in a case where the both are intentionally separated, the separating action appears physically on the name display card. For example, in a case where the name display card and RFID are covered by a film and separated, it can be confirmed that the film is broken, and there poses a problem in view of security by the appearance.

As shown in Claim 7, there is provided the cable construction assistance/management system according to Claim 5 or 6, wherein the portable terminal includes registration means for registering an end of the operation in correspondence with the piece of assistance information of the operation, and the piece of cable identification information, registration day and time, and the piece of operator information are uploaded to the server at the end of the operation by the registration means or when an uploading instruction is inputted. Thereby, there can easily be managed an operation history of by which operator, how, and when the operation is finished or the like.

As shown in Claim 8, there is provided the cable construction assistance/management system according to any one of Claims 1 through 7, wherein the piece of assistance information of the operation includes one or more of operations of pieces of information with regard to a cable cut-and-divide operation of cutting and dividing the cable of a designed length from a cable drum, a cable laying operation of laying the cut and divided cable along a designed route, a terminal processing operation of processing cable terminals at both ends of the laid cable to be able to be connected, a cable connection operation of connecting the cable terminal subjected to the terminal processing to a panel or a terminal board, and a checking operation of the connected cable.

As shown in Claim 9, there is provided the cable construction assistance/management system according to Claim 8, wherein the piece of assistance information with regard to the operation of cutting and dividing the cable includes a piece of information for specifying the cable and the design length of the cable.

As shown in Claim 10, there is provided the cable construction assistance/management system according to Claim 8 or 9, wherein the piece of assistance information with regard to the cable laying operation includes a piece of information of a route on which the cable is laid. The route information of laying the cable is indicated by, for example, a point number of a cable tray (cable rack).

As shown in Claim 11, there is provided the cable construction assistance/management system according to any one of Claims 8 through 10, wherein the piece of assistance information with regard to the terminal processing operation, the cable connecting operation, and the checking operation includes a cable connection diagram.

As shown in Claim 12, there is provided the cable construction assistance/management system according to Claim 11, wherein the piece of assistance information with regard to the checking operation includes a check list.

### Advantageous Effects of Invention

According to the present invention, human resource saving and acceleration of the operation can be achieved, and the security can be promoted by preventing an illegal use of an unauthorized operator by displaying the operation information by the portable terminal.

### Brief Description of Drawings

Fig. 1 is an outline configuration diagram of a cable construction assistance/management system according to the present invention.
Fig. 2 illustrates outline views showing a state of pasting a name display card on a helmet.
Fig. 3 is a flowchart of processing of collating an operator ID and a permitter ID.
Fig. 4 is a total configuration diagram of the cable construction assistance/management system according to the present invention.
Fig. 5 is a diagram used for explaining automatic fabrication of a cable connection diagram.
Fig. 6 is a diagram used for explaining an edition of the cable connection diagram which is automatically fabricated.
Fig. 7 is a diagram showing a flow of a cable design construction/management according to the present invention.
Fig. 8 is a diagram used for explaining a correlation of a production number of an RFID tag which is embedded to an index seal attached with RFID and cable information.
Fig. 9 is a flowchart showing a flow of respective operations of the cable construction/management system according to the present invention.
Fig. 10 is a view showing a downloaded screen displayed on PDA.
Fig. 11 is a diagram showing a screen of PDA when operation information is obtained.
Fig. 12 is a diagram showing a cable cut-and-divide operation screen displayed on PDA.
Fig. 13 is a diagram showing a cable laying operation screen displayed on PDA.
Fig. 14 is a diagram showing a screen of PDA when operation information of a cable terminal operation is obtained.
Fig. 15 is a diagram showing a cable connection operation screen displayed on a tablet PC.
Fig. 16 is a diagram showing a cable connection operation screen and a QC check screen displayed on the tablet PC when QC is checked.
Fig. 17 is a diagram showing a flow of a conventional cable design construction/management.
Fig. 18 is a diagram showing a conventional cable laying card.

### Description of Embodiments

An explanation will be given of an embodiment of a cable construction assistance/management system according to the present invention in reference to attached drawings as follows.

### <System outline configuration diagram>

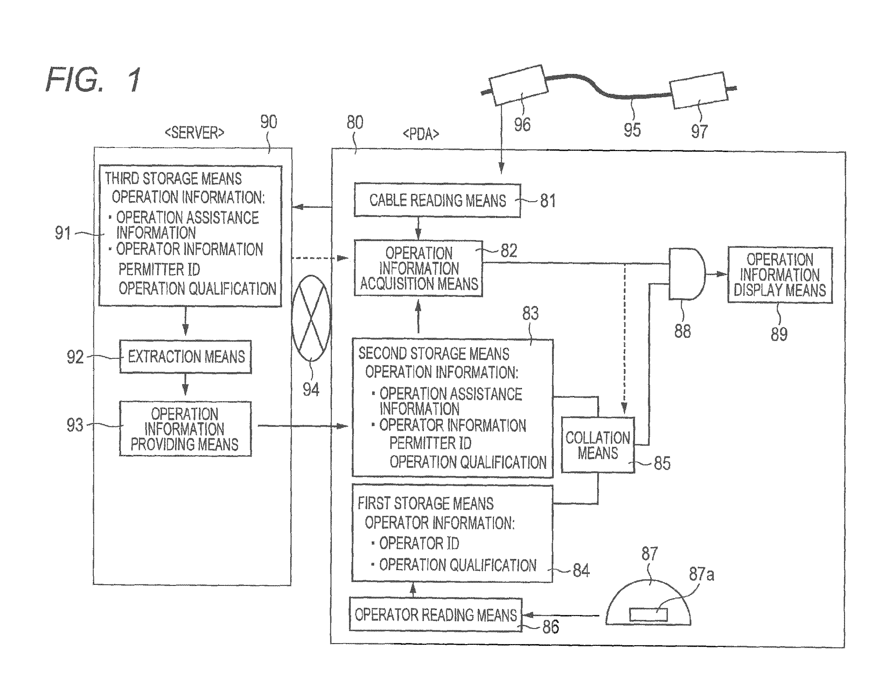

Fig. 1 is an outline configuration diagram of a cable construction assistance/management system. In Fig. 1, the cable construction assistance/management system is configured by a portable terminal (PDA) 80 which is carried by an operator, and a server 90 which exchanges necessary information with the portable terminal 80 via a network 94, and configured by a cable 95 attached with cable laying cards 96 and 97 which are recorded with original cable identification information.

The portable terminal 80 includes operator reading means 86 which reads operator information from RFID of an operator authentification card 87a that is pasted on a helmet 87 of an operator who carries out the operation and recorded with the operator information (presence or absence of permittance of a cable connecting operation, presence or absence of a qualification other than information of a name display card) including an operator ID, first storage means 84 which stores the read operator information, cable reading means 81 which reads cable identification information from RFID of the cable laying cards 96 and 97, second storage means 83 which downloads to store assistance information that assists an operation of an operation permittance cable that is provided from the server 90, and operation information configured by operator information including a permitter ID with regard to an operation permitter previously in association with the cable identification information, operation information acquisition means 82 which acquires the operation information for a corresponding cable from the second storage means 83 based on the cable identification information read by the cable reading means, collation means 85 which compares an operator ID of the operator information that is stored in the first storage means 84 with the permitter ID of the operator information that is stored in the second storage means 83, and outputs display permittance information in a case where the operator ID and the permitter ID coincide with each other, and display means 89 which displays the operation information that is acquired by the operation information acquisition means 82 by the display permittance information. Numeral 88 designates a gate which calculates AND of the display permittance information and the operator information and outputs the operator information to the display means 89.

The server includes third storage means 91 which stores the assistance information that assists an operation of each cable that is laid in the facility, and the operator information including the permitter ID with regard to the operation permitter in association with each cable identification information, extraction means 92 which extracts operation information of a corresponding cable from the third storage means 91 from the third storage means 91 in accordance with a request for downloading from the portable terminal 80, and operation information providing means 93 which provides the operation information that is extracted by the extraction means 92 to the portable terminal 80 along with the cable identification information.

According to the configuration described above (invention according to Claim 1), there is constructed the configuration of downloading the operation information which assists the operation for the operation permittance cable first (previously) from the server 90 to the second storage means 83. As other configuration (invention according to Claim 2), there may be constructed a configuration of downloading the operation information of the corresponding cable to the operation information acquisition means 82 based on the cable identification information which is read from the server 90 when the cable identification information is read from the cable laying cards 96 and 97 by using the cable reading means 81 of the portable terminal.

In this case, in Fig. 1, there is constructed a configuration in which the second storage means 83 is not included in the portable terminal 80, the operation information is downloaded from the server 90 to the operation information acquisition means 82 as shown by a broken line, and the operation information from the operation information acquisition means 82 is inputted to the collation means 85 as shown by a broken line and compared with operator information from the first storage means 84.

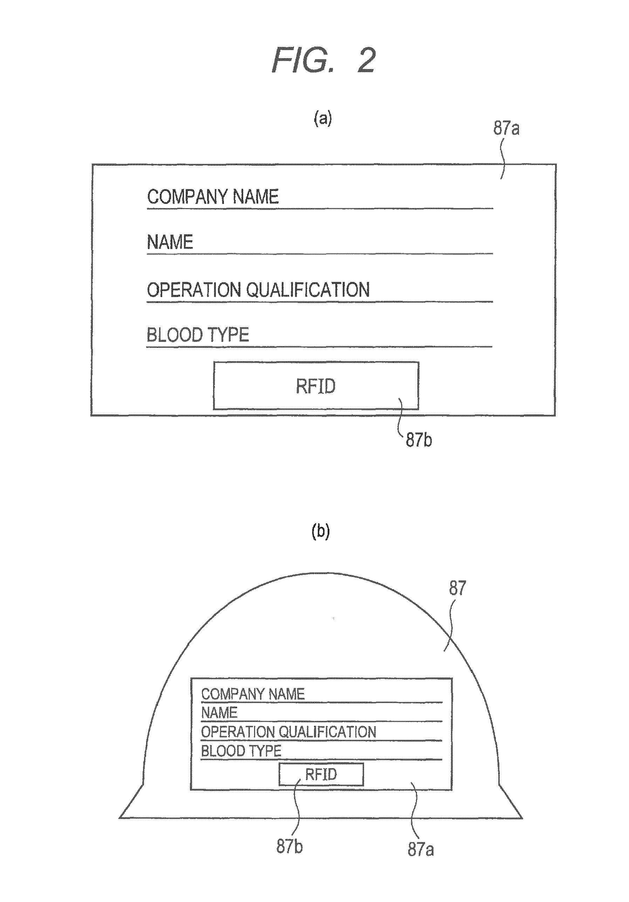

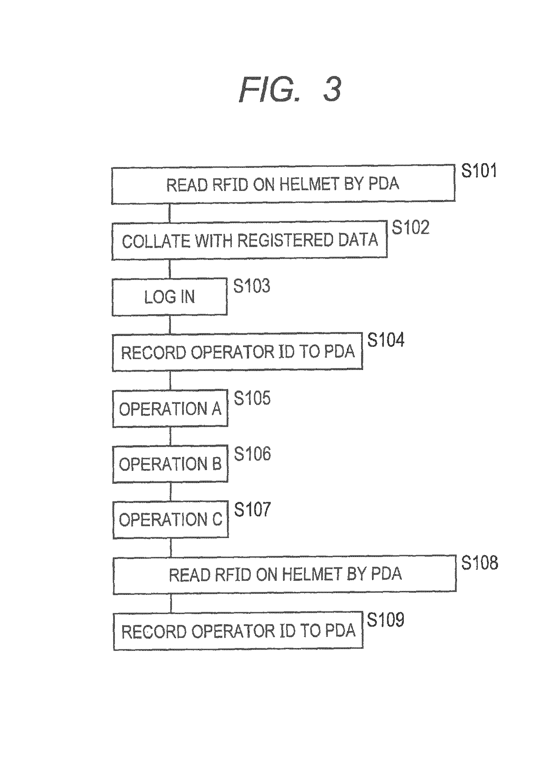

Fig. 2 illustrates views showing outlooks of the operator authentification card 87a which is pasted on the helmet 87 of the operator who carries out the operation of laying the cable, and the helmet 87 pasted therewith. Fig. 3 is a flowchart showing an outline flow of an operation in accordance with reading the operator information of the operator authentification card on the helmet.

At step (S)101 of Fig. 3, the operator information including the operator ID within RFID 87b of the operator authentification card 87a on the helmet is read by PDA 80, and is collated with the operator information including the permitter ID which is previously downloaded from the server and stored to the first storage means at S102. "Log in" is carried out at S103 based on a coincidence of a result of the collation, and the operator ID is recorded to PDA at step S104. Next, operations A through C which are necessary for laying the cable are carried out at S105 through S107 while looking at the assistance information of the operation in the operation information that is displayed. Here, the assistance information of the operation of the displayed operation information includes a screen of a cable cut-and-divide operation, a screen of cable information (cable number, design length, line kind, core number, specification code) and the like.

After finishing all the operation, at S108, the operator information of RFID of the operator authentification card 87a on the helmet is read again, and at S109, the operator ID of the operator information is recorded again to PDA. By the series of flow, the operation by the regular operator is carried out, and the operator and the result are recorded. A reliability of a history management is promoted by carrying out the association between the operation and the operator information at different times.

As described above, at an operation field, a reliability of the operation (promotion of security) and a consistency of the history management can be achieved by integrally pasting RFID which is recorded with the operator information (presence or absence of permittance of cable connecting operation, presence or absence of qualification in addition to printed information of the name display card) on the name display card (operator authentification card) which is pasted on the helmet distributed to the individual operator and displays the information of company name, name, operation qualification, blood type and the like, reading the operator information by the RFID reader which is provided to PDA, and recording the operator information at operation start and end times.

Also, operation information for a cable can be acquired and displayed on the portable terminal by reading the cable identification information from the cable laying card which is attached to the cable by the portable terminal of each operator, and each operator can easily and firmly carry out the necessary operation while looking at the displayed assistance information of the operation.

Further, the server side can easily manage an operation history by inputting the operator information to the portable terminal and registering the end of the operation. Human resource saving and acceleration of the operation and a confirmation operation are achieved and illegal use of an unpermitted operator is prevented.

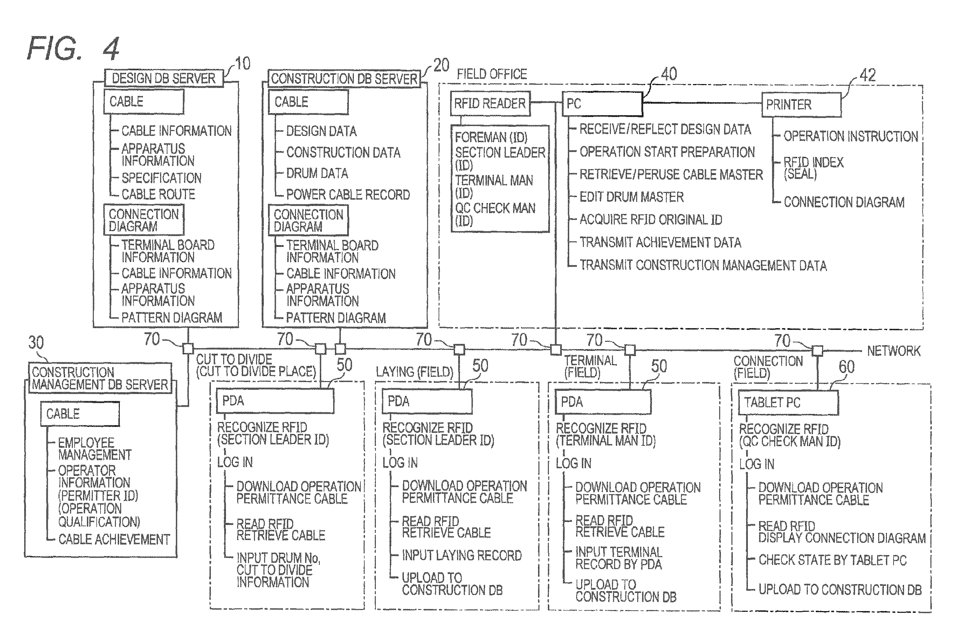

Fig. 4 is a total configuration diagram of the cable construction assistance/management system according to the present invention. The cable construction assistance/management system is mainly configured by a design database server (DB server) 10 which is installed in the office of an enterprise that carries out cable construction or the like, a construction DB server 20, a construction management DB server 30, a personal computer 40 which is installed at a field office of a large-sized plant equipment of an atomic power plant or the like, a printer 42, a portable terminal (PDA (personal digital assistance) 50, tablet PC 60) which an operator of each field carries, and a network connecting these. Here, the servers 10, 20, and 30 correspond to the server 90 of Fig. 1, and PDA 50 corresponds to PDA 80 of Fig. 1.

The design DB server 10, the construction DB server 20, the construction management DB server 30 in the enterprise office, and the personal computer 40 of the field office is respectively connected by private circuits. Also, PDA 50, and the table PC 60 incorporate a communication function by wireless LAN, and are made to be able to communicate with the respective DB servers and the like which are connected to the private circuits via wireless access points 70 which are installed at respective floors of a building, or respective prescribed areas.

The design DB server 50 manages information with regard to a cable (cable information, apparatus information, specification, cable route) and information with regard to a cable connection diagram (terminal board information, cable information, apparatus information, pattern diagram) and the like and information for construction which is permitted by a design department is delivered to the construction DB server 20.

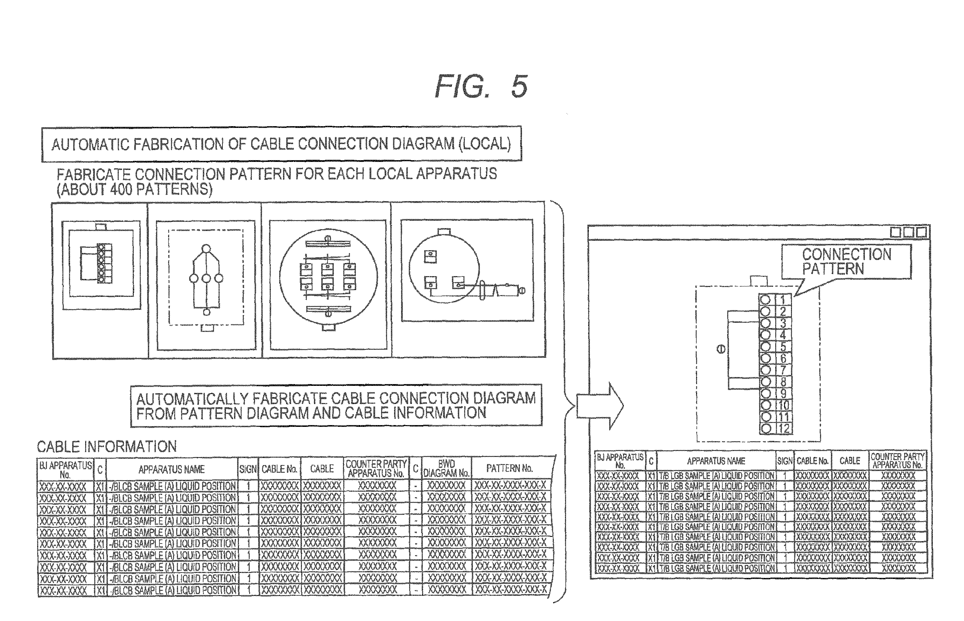

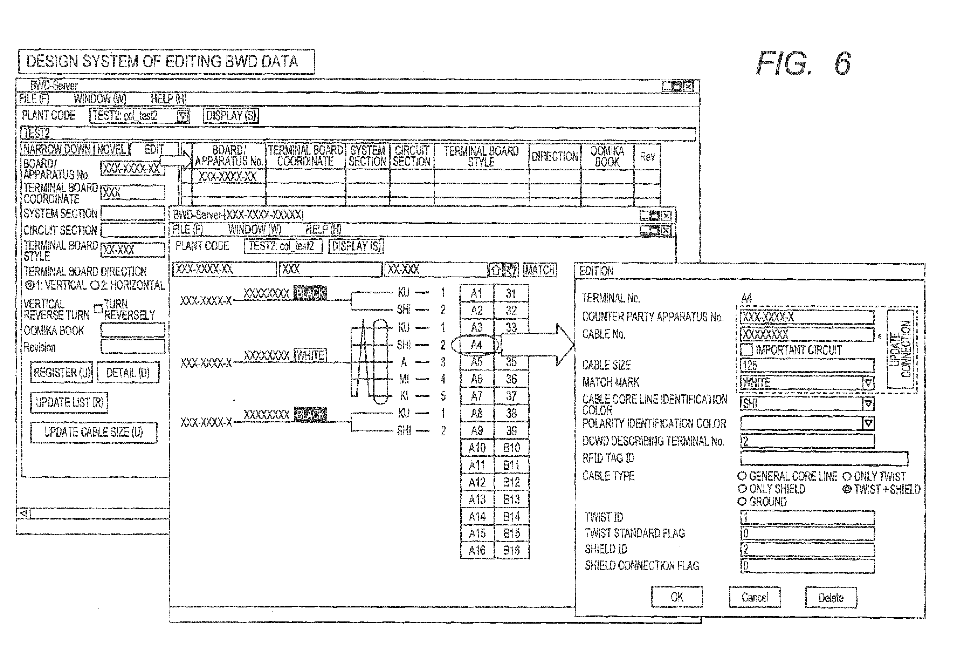

Further, a personal computer (not illustrated) which is installed at the design department stores a cable connection diagram automatically generating program, and the personal computer automatically generates a cable connection diagram of ECWD system (Elementary control wiring diagrams) and the like based on a pattern diagram and cable information of each local apparatus as shown in Fig. 5. Also, the personal computer includes a function of editing the cable connection diagram which is automatically generated as described as shown in Fig. 6. The design DB server 10 also manages information of the cable connection diagram.

The construction management DB server 30 manages individual information of an employee based on authentification information (user ID) of an employee (operator) and manages an achievement data of cable construction. Here, the employee is an employee including the operator, and the authentification information in the case of the operator is operator information including "permitter ID" and "operation qualification".

The personal computer 40 of the field office outputs print information of a cable number to the printer 42, and makes the printer 42 print the cable number on a cable laying card. Incidentally, the cable laying card is previously embedded with an RFID tag (RFID: Radio Frequency Identification), and the RFID tag is recorded with unique cable identification information (cable ID) which corresponds with the cable number in a one-to-one relationship.

The personal computer 40 outputs print information of operator information of an operator to the printer 42 and makes the printer 42 print the operator information on the operator authentification card 87a. Incidentally, the operator authentification card 87a is previously embedded with the RFID tag 87b, and the RFID tag is recorded with unique information in correspondence with the printed operator information. The operator information is configured by company name, name, operation qualification, blood type, operator ID and the like. The operator authentification card 87a which is printed and recorded with the information is pasted on the helmet 87 that is owned by the corresponding operator.

The personal computer 40 associates the cable number and the cable ID by receiving the cable ID, or reading the cable ID from the cable laying card which is outputted from the printer 40, and transmits the associated information to the construction DB server 20. The construction DB server 20 links the information which associates the cable number and the cable that is transmitted from the personal computer 40, and operation information of each field which is managed for each cable number.

The personal computer 40 associates the cable number and the operator information by receiving the operator information, or reading the operator information from the operator authentification card 87a which is outputted from the printer 42, and transmits the associated information to the construction management DB server 30. The construction management DB server 30 links the cable number and the operator information which are transmitted from the personal computer 40, and the operation information at each field which is managed for each cable number.

PDA 50 and the tablet PC 60 include operating systems (OS) for operating as terminals, device drivers of peripheral equipment, as well as storing means storing software for applying to the cable construction assistance/management system according to the present invention, display means of a liquid crystal display or the like, and input means of a touch panel or the like. Also, connectors or slots of PDA 50 and the tablet PC 60 are attached with RFID readers for reading cable ID from the RFID tag.

### <Flow of cable design construction/management by the present invention>

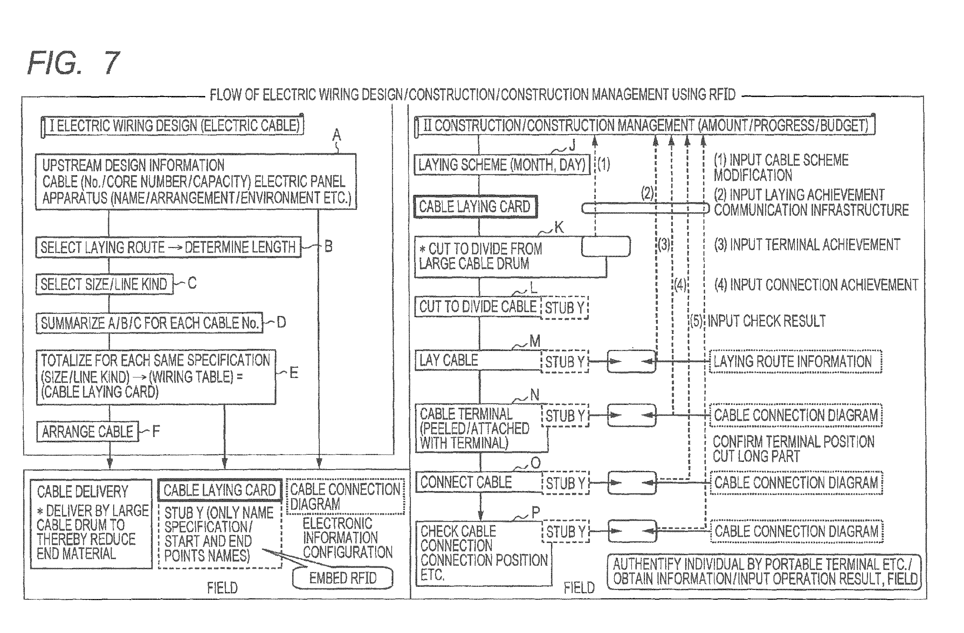

Fig. 7 is a diagram showing a flow of cable design construction/management by the present invention. Incidentally, in Fig. 7, a step in correspondence with the step that is shown in the conventional flow of cable design construction/management of Fig. 17 is attached with the same step number.

First, a cable laying card (stub Y) which is embedded with the RFID tag is issued in place of the cable laying card (stub X, stub Y) of the conventional paper base shown in Fig. 18. PDA 50 and the tablet 60 which are carried by an operator at each field are able to download the operation information from the construction DB server 20 via the network.

At step K, operation information for cutting and dividing a cable in correspondence with a cable number from the cable drum is acquired by reading the RFID tag. At step L, the stubs Y which are embedded with the RFID tags are pasted on both ends of the cut and divided cable. At a field of laying the cable, laying route information is acquired by reading a cable ID from the stub Y by PDA 50 (step M). An operator carries out an operation of laying the cable in line with a laying route based on the laying route information.

At step N, a processing (peel, attach terminal) of a cable terminal is carried out. With regard to a cable connection diagram which is necessary for processing the cable terminal, the cable connection diagram is acquired by reading a cable ID from the stub Y by PDA 50. Similarly, in a cable connection operation of connecting a cable to a panel and a terminal board at step O, and in checking cable connection at step P, the cable connection diagram and a check list are acquired by reading the cable ID from the stub Y by the tablet PC 60.

That is, in the system according to the present invention, the conventional portion (stub X) which is printed with all of the information is dispensed with, and the paper base cable connection diagram is dispensed with. Also, an input of an achievement data at each operation can be carried out by a portable terminal, and a document or the like for describing an achievement is dispensed with.

### <Collation of RFID production number and cable information>

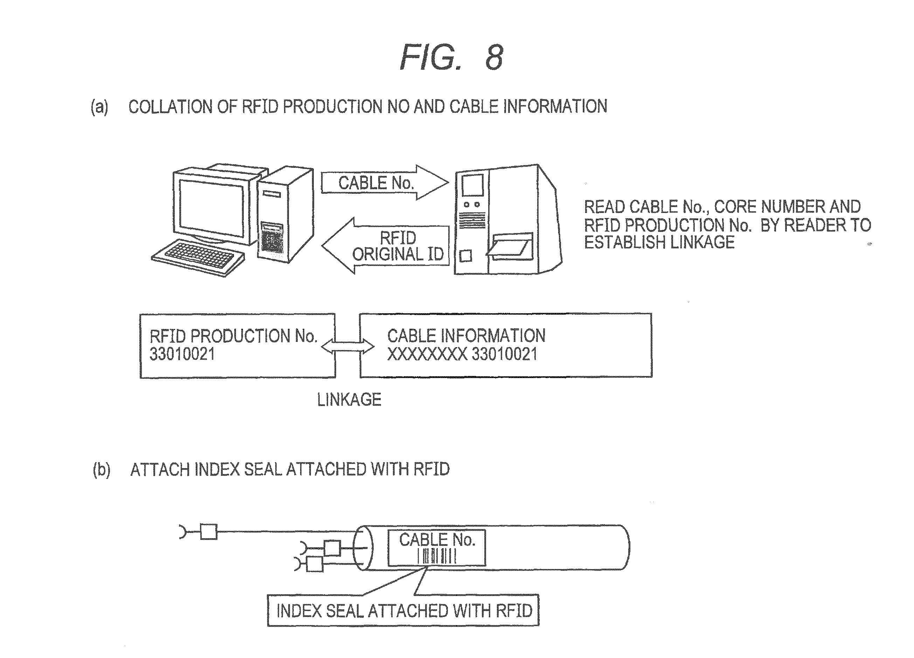

As shown in Fig. 8(A), when a cable number for one piece of cable is inputted from the personal computer 40 which is installed at a field office to the printer 42, the printer 42 prints to output 2 sheets of cable laying cards (hereinafter, referred to as "index seal attached with RFID") which are embedded with RFID tags which are recorded with unique cable ID's (RFID original ID's).

As shown in Fig. 8(B), 2 sheets of the index seals 44 attached with RFID are respectively pasted on both ends of the cable (only one end is shown in Fig. 8(B)). Incidentally, the RFID original ID which is embedded to the index seal attached with RFID is, for example, an RFID production number which is attached in production, and respectively different ID's are recorded to the RFID tags respectively embedded to 2 sheets of the index seals attached with RFID's which are issued for each cable.

The printer 42 prints the cable number to the index seal attached with RFID, and informs the RFID original ID's (hereinafter, referred to as "cable ID") which are embedded to 2 sheets of the index seals attached with RFID which are printed in correspondence with the cable number to the personal computer 40. Incidentally, the personal computer may be provided with an RFID reader, and read the cable ID from the index seal attached with RFID that is printed to output at respective times.

The personal computer 40 associates the cable information (cable number) and the cable ID's which are recorded to RFID tags of 2 sheets of the index seals attached with RFID which are printed to output in correspondence with the cable number, and transmits the associated information to the construction DB server 20.

Various kinds of information which are associated with a cable that is associated with the cable number or the like are made to be able to be acquired from the construction DB server 20 by reading the cable ID from the RFID tag as described later by associating the cable number and the cable ID in this way.

### <Operation content in cable construction

### assistance/management system>

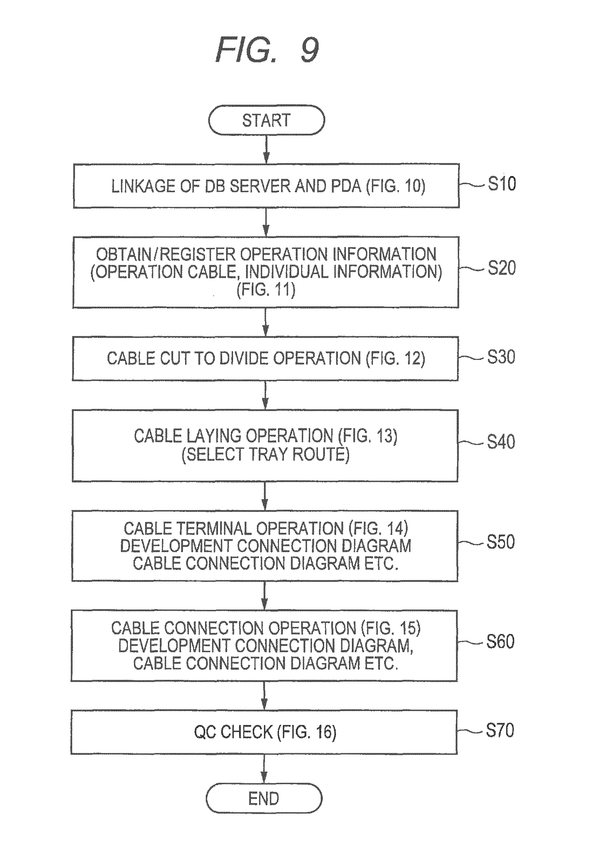

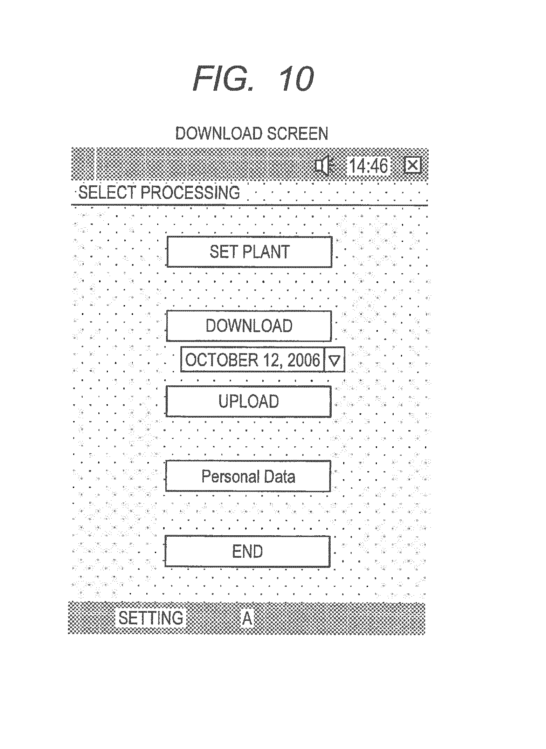

Fig. 9 is a flowchart showing a flow of respective operations in the cable construction assistance/management system according to the present invention, and an explanation will be given of respective operation contents in reference to Fig. 10 through Fig. 16.

### [Linkage of DB server and PDA (step S10)]

The construction DB server 20 and PDA 50, and the tablet PC 60 of the respective operators are connected via wireless LAN and the private circuit, and PDA 50 and the tablet PC 60 download operation information which assists an operation for an operation permittance cable, and operation information previously associated with cable ID from the construction DB server 20.

Fig. 10 shows a download screen which is displayed on PDA 50. As shown in the drawing, at PDA 50, the download screen is displayed at display means of PDA 50 by activating software which is installed for the cable construction assistance/management system, and selecting a menu of download.

The operator sets a plant, inputs a date, and inputs user ID to PDA 50 on PDA 50 in downloading. Incidentally, the input of the user ID is carried out by reading the RFID tag which is embedded to an authentification card (name card etc.) of each operator by the RFID reader that is connected to PDA 50.

When a software button of downloading is pressed down, a download request is informed to the construction DB server 20 via the wireless LAN and the private circuit along with the plant name, the date, and user ID. The construction DB server 20 carries out an authentification processing of an operator from the user ID based on information that is managed by the construction management DB server 30. When it is determined that the operator is endowed with an access authority, the construction DB server 20 retrieves an operation permittance cable which is endowed with an operation permittance at a stage of design, and transmits operation information for the retrieved operation permittance cable to PDA 50. PDA 50 stores the downloaded operation information to storage means in PDA in this way.

Incidentally, the download screen also displays a software button of uploading, and when the button is pressed down, an operation achievement data which is stored in PDA 50 is uploaded to the construction DB server 20 and the construction management DB server 50.

### [Obtain operation information (step S20)]

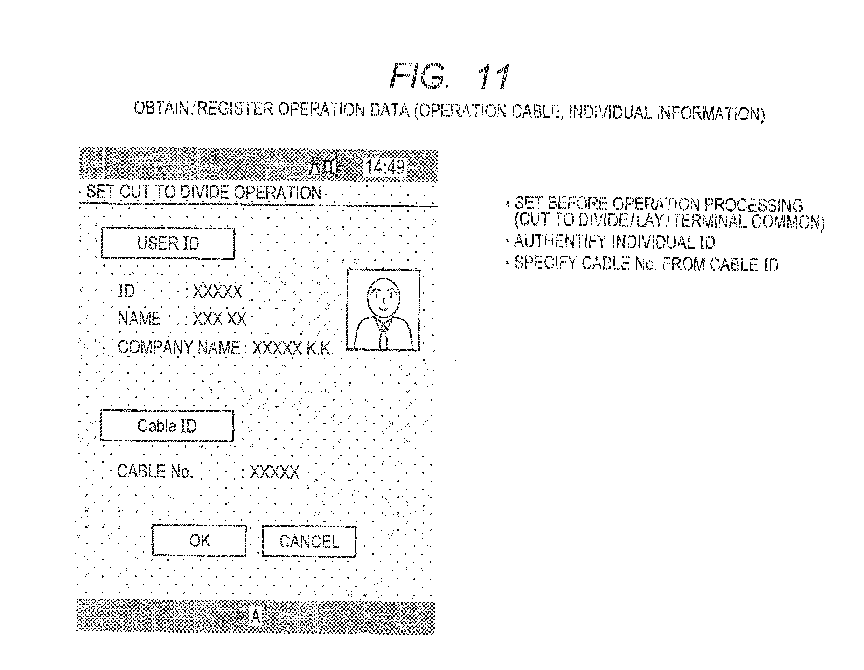

Fig. 11 shows a screen of PDA 50 when operation information is obtained. An operator sets an operation of any of operations of a cable cut-and-divide operation, a cable cut-and-divide operation, a cable laying operation, a cable terminal operation, and a cable connecting operation on PDA 50, and makes PDA 50 display a screen of setting a desired operation. Incidentally, Fig. 11 shows a screen in a case where a cable cut-and-divide operation is set.

Successively, the operator obtains (reads) operation information of the cable cut-and-divide operation for the cable at which the operation is carried out actually from a list of the operation permittance cables which are downloaded to store by inputting the user ID and the cable ID to PDA 50 and pressing down an OK button. The read operation information is displayed on the display means of PDA 50. Thereby, the operation can be instructed and the operation can be assisted for the operator.

Here, the user ID is inputted by reading the RFID tag which is embedded to the authentification card of the user by the RFID reader similar to the above-described, and the cable ID is inputted by reading the RFID tag which is embedded to the index sheet 44 attached with RFID (refer to Fig. 8(B)) by the RFID reader.

Incidentally, the terminal operation in obtaining the operation information is an operation which is carried out before each operation of the cable cut-and-divide operation, the cable laying operation, the cable terminal operation, and the cable connecting operation and is common to the respective operations.

### [Cable cut-and-divide operation (step S30)]

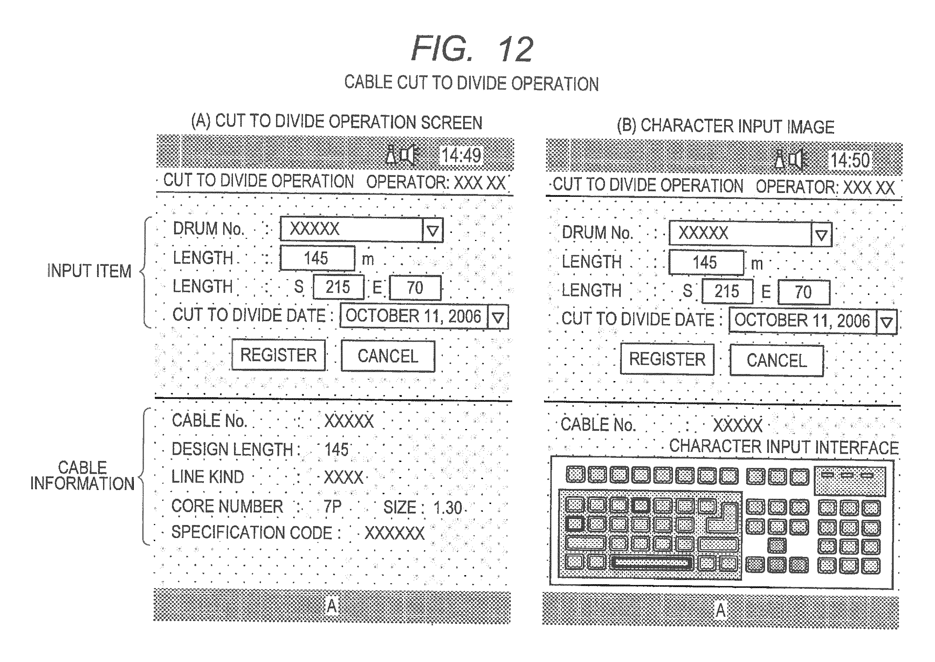

Fig. 12 shows a cable cut-and-divide operation screen which is displayed on PDA 50. The operator obtains the operation information of the cable cut-and-divide operation as described above, and makes PDA 50 display the cable cut-and-divide operation screen as assistance information. The cable cut-and-divide operation screen shown in Fig. 12(A) displays cable information (cable number, design length, line kind, core number, specification code) which is used in the cut-and-divide operation based on the obtained operation information. The operator selects a cable drum which is wound with a cable to be cut and divided in reference to the cable information, and cuts and divides a cable of an amount of a design length from the cable drum.

When the cut-and-divide operation is finished, as shown in Fig. 12(B), a software keyboard is displayed on PDA 50, and input items (drum number of cable drum, length, length (length marks of start and end), cut and divide date) showing an operation result in the cut-and-divide operation are inputted to PDA 50. Incidentally, a cable of, for example, 2000 m is wound around an unused cable drum, and the cable is attached with length marks at each 1 m. According to the embodiment, 215 is inputted as a length mark of start, 70 is inputted as a length mark of end. Thereby, it is known that a cable of 145 m (= 215 - 70) is cut and divided from the cable drum, and a remaining cable length of the cable drum is 70 m.

After inputting the input items described above, when a register button is pressed down, the user ID, the cable ID, and registration day and time are stored to the storage means in PDA along with the input items of the cut-and-divide operation. Also, the index seals 44 attached with RFID are respectively pasted on both ends of the cable which is cut and divided as described above.

### [Cable laying operation (step S40)]

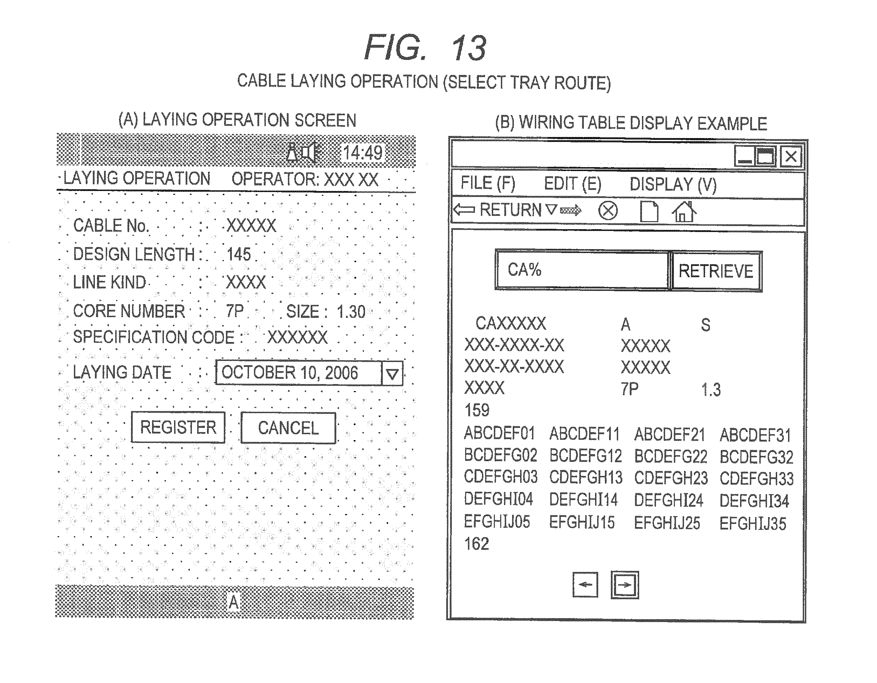

Fig. 13 shows a cable laying operation screen which is displayed on PDA 50. The operator selects a processing of a cable laying operation, reads the cable ID from the index seal 44 attached with RFID which is pasted on the cable by the RFID reader of PDA 50, reads the user ID from the authentification card to thereby obtain the operation information of the cable laying operation and displays the cable laying screen on PDA 50.

The cable laying operation screen shown in Fig. 13(A) displays cable information (cable number, design length, line kind, core number, specification code) which is used in the laying operation based on the obtained operation information, and a cable laying operation screen (screen of next page) shown in Fig. 13(B) displays route information of laying a cable (for example, list of point numbers of cable tray (cable rack)).

The operator lays the cable along the cable tray and the cable rack in a building in reference to the route information. When the laying operation is finished, the operator presses down a register button on the cable laying operation screen of Fig. 13(A), and stores the user ID, the cable ID, and registration day and time to the storage means in PDA along with the information of the laying operation.

### [Cable terminal operation (step S50)]

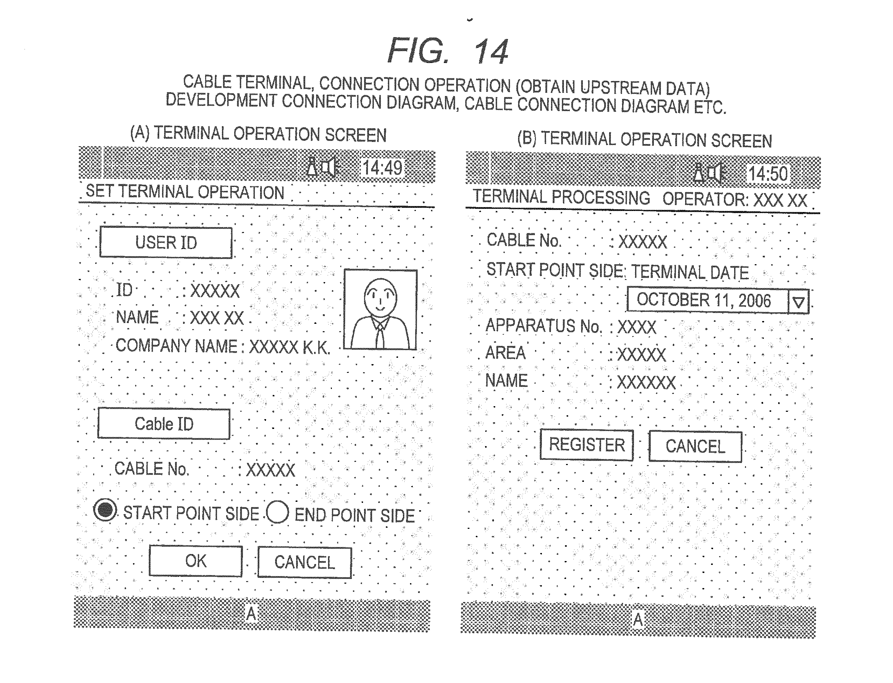

Fig. 14 shows a screen of PDA 50 when operation information of a cable terminal operation is obtained. The operator makes PDA 50 display a screen of setting a terminal operation, inputs the user ID and the cable ID, and instructs whether a cable terminal to be processed is disposed on a start side or an end side. Incidentally, in Fig. 14(A) it is instructed that a cable terminal is disposed on the start side.

Successively, the operator obtains operation information of the cable terminal operation on the start side of the cable by which the operation is carried out actually from a list of operation permittance cables which are downloaded to store as described above by pressing down an OK button.

Further, although the both ends of the cable are pasted with index seals attached with RFID respectively having different cable ID's, it can be specified whether the cable ID of the index seal attached with RFID which is read by PDA 50 is on the start side or the end side of the cable (that is, the respective cable ID's can be associated with data on the start side and data on the end side) by designating the start side or the end side.

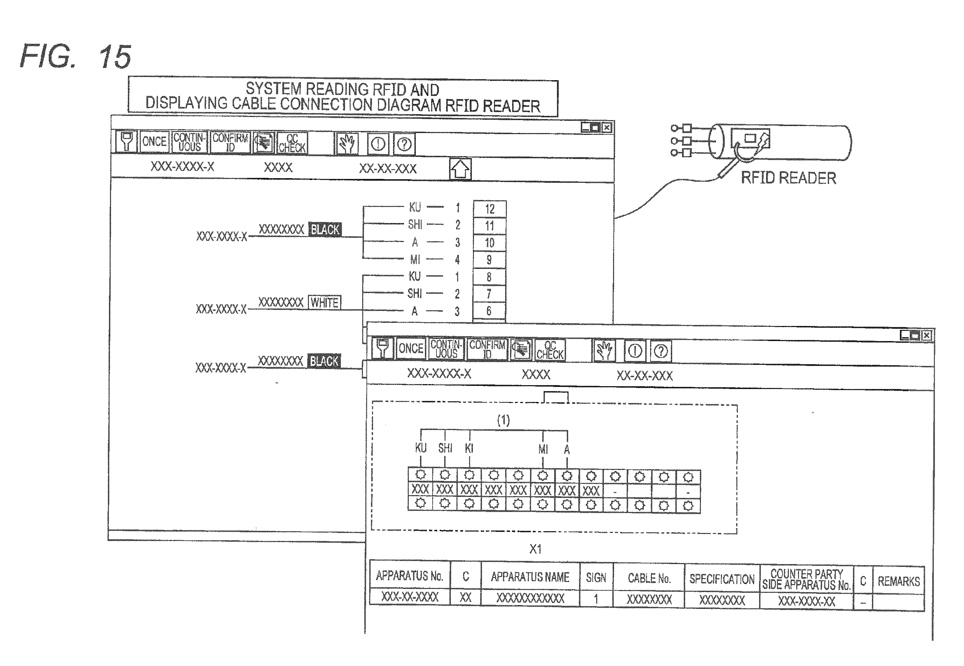

PDA 50 displays a cable connection diagram (refer to Fig. 15) based on the operation information of the cable terminal operation which is obtained as described above. The operator carries out the cable terminal operation in reference to the cable connection diagram that is displayed on PDA 50. As the cable terminal operation, cable skin peeling and terminal attaching are carried out at an end portion of the cable as shown in Fig. 8(B), and a length of peeling the skin, lengths of the respective core lines and the like can pertinently be adjusted in reference to the cable connection diagram.

When the terminal processing is finished, the operator presses down a register button on the terminal operation screen of Fig. 14(B) and stores the user ID, the cable ID, and registration day and time to the storage means in PDA along with information of the terminal operation.

### [Cable connecting operation (step S60)]

Fig. 15 shows a cable connecting operation screen which is displayed on the tablet PC 60. The operator selects a processing of a cable connecting operation, obtains operation information of the cable connecting operation by reading the cable ID from the index seal 44 attached with RFID which is pasted on the cable by the RFID reader of the tablet PC 60, and reading the user ID from the authentification card, and displays the cable connection diagram on the tablet PC 60 based on the operation information.

In the cable connection diagram shown in Fig. 15, notations "KU", SHI", "A", and "MI" which are displayed in correspondence with core lines of a cable designate colors of core lines (black, white, red, green), and numerals designate numbers described on the core lines. The operator can confirm which core line of the cable is to be connected to which position of a panel, or terminal board from the cable connection diagram displayed on the tablet PC 60, thereby, the cable connecting operation can correctly be carried out.

Incidentally, the reason that the operator who carries out the cable connecting operation uses the tablet PC 60 without using PDA 50 is that the screen is larger in the tablet PC 60, and the cable connection diagram is easier to see. Therefore, in a case where the screen of the cable connection diagram may be small, PDA 50 may be used in place of the tablet PC 60.

### [QC check (step S70)]

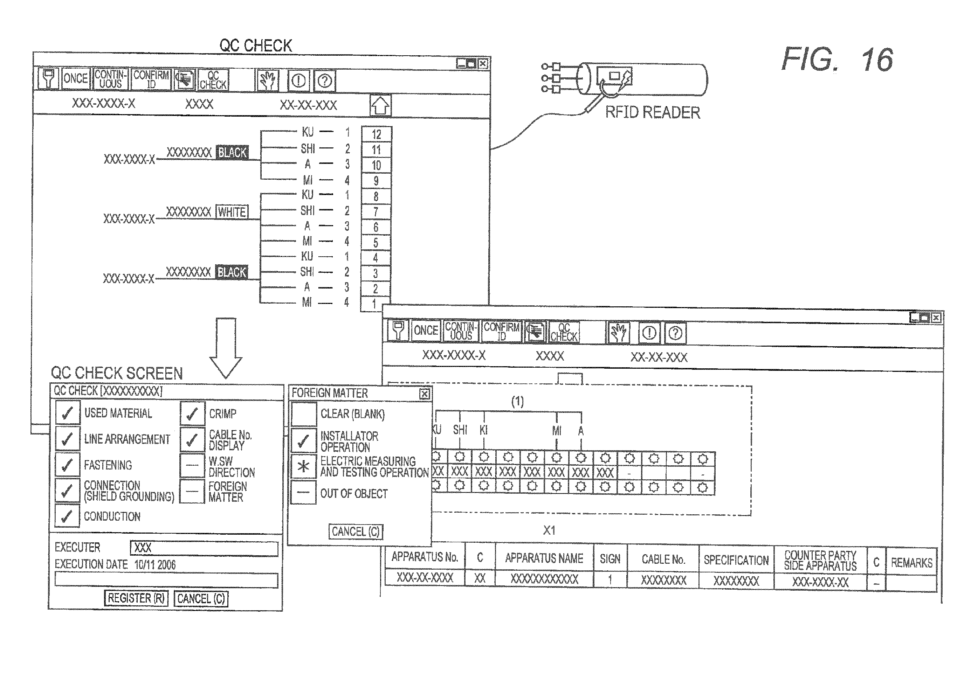

When the cable connecting operation is finished, successively, a QC check (Quality Control) is carried out by the same operator. That is, when a button of "QC check" is clicked on a menu bar which is displayed at an upper portion of the cable connecting operation screen shown in Fig. 15, a QC check screen appears as a pop up screen as shown in Fig. 16.

The operator of cable connection (checker) carries out the QC check while inputting a check to a check box of a check item which is displayed on the QC check screen. When the QC check is finished, the checker presses down a register button on the QC check screen, and registers the user ID, the cable ID, and the registration day and time to the storage means of PDA along with information of the cable connecting operation and a result of the QC check.

When the software button of uploading is pressed down in the downloading screen as explained in reference to Fig. 10, operation achievement data (information of respective operations, user ID, cable ID, and registration day and time, check result etc.) which are registered to the storage means of the tablet PC 60 are uploaded to the construction DB server 20 and the construction management DB server 30, and utilized in the respective DB servers.

Respective departments and fields can confirm a situation of progressing operations, confirm a remaining material of a cable after having been cut and divided, and confirm a stock from an operation ongoing situation of laying, terminal, and connection of the cable in real time based on the operation achievement data, and can easily totalize and grasp the individual operation achievement of the employee.

### <Other embodiments>

In the above-described embodiment, there is used the portable terminal of PDA or the like which incorporates a communication function by wireless LAN. However, the present invention is not limited thereto but necessary information may be downloaded or uploaded by connecting to an apparatus which is connected to a network via a cable or a cradle.

According to the present embodiment, operation information for an operation permittance cable is downloaded at a time, stored to the storage means in the portable terminal, and necessary operation information is read from the storage means by selecting the processing of the operation and inputting the cable ID. However, the present invention is not limited thereto but the user ID, the cable ID, and a selection of the processing of the operation may be notified to the DB server for each operation, and operation information necessary for the operation may be downloaded from the DB server for each operation. Incidentally, servers of the construction DB server, the construction management DB server and the like may be integrated.

According to the embodiment, the index seal attached with RFID is pasted on the end portion of the cable. However, a cable laying card which is printed with a bar code indicating a unique cable ID may be pasted on the end portion of the cable. In this case, it is necessary to provide a bar code reader to a portable terminal of PDA or the like.

### Reference Sings List

10, 20, 30, 90...servers, 40...personal computer, 42...printer, 44, 96, 97...cable laying cards (index seals attached with RFID), 50, 60, 80...portable terminals (PDA, tablet PC), 70...wireless access point, 81...cable reading means, 82...operation information acquiring means, 83...second storage means, 84...first storage means, 85...collation means, 86...operator reading means, 87...helmet, 87a...operator authentification card, 87b...RFID tag, 89...operation information display means, 91...third storage means, 92...extraction means, 93...operation information providing means, 94...network

## Claims

1. A cable construction assistance/management system comprising a portable terminal which an operator carries, and a server for exchanging a piece of necessary information with the portable terminal via a network, and assisting an operation of connecting a cable attached with a cable laying card recorded with a piece of original cable identification information along a previously designed route;
wherein the portable terminal includes:
operator reading means for reading a piece of operator information from an operator authentification card recorded with the piece of operator information including an operator ID pasted on a helmet of the operator who carries out the operation;
first storage means for storing the piece of read operator information;
cable reading means for reading the piece of cable identification information from the cable laying card;
second storage means for downloading to store a piece of assistance information of assisting an operation of an operation permittance cable provided from the server and a piece of operation information including the piece of operator information including a permitter ID with regard to an operation permitter previously in association with the piece of cable identification information;
operation information acquiring means for acquiring the piece of operation information for the corresponding cable from the second storage means based on the piece of cable identification information read by the cable reading means;
collation means for outputting a piece of display permittance information in a case of comparing the operator ID of the piece of operator information stored to the first storage means with the permitter ID of the piece of operator information stored to the second storage means to coincide with each other; and
display means for displaying the piece of operation information acquired by the operation information acquiring means by the piece of display permittance information; and
wherein the server includes:
third storage means for storing the piece of assistance information of assisting the operation of each cable laid in the facility and the piece of operator information including the permitter ID with regard to the operation permitter in association with each piece of cable identification information;
extraction means for extracting the piece of operation information of the corresponding cable from the third storage means from the third storage means in accordance with a request for downloading from the portable terminal; and
operation information providing means for providing the piece of operation information extracted by the extraction means to the portable terminal along with the piece of cable identification information.

2. A cable construction assistance/management system comprising a portable terminal which an operator carries, and a server of exchanging a piece of necessary information with the portable terminal via a network, and assisting an operation of connecting a cable attached with a cable card recorded with a piece of original cable identification information along a previously designed route;
wherein the portable terminal includes:
operator reading means for reading a piece of operator information from an operator authentification card stored with the piece of operator information including an operator ID pasted on a helmet of the operator who carries out the operation;
first storage means for storing the piece of read operator information;
cable reading means for reading the piece of cable identification information from the cable card;
operation information acquiring means for acquiring a piece of assistance information with regard to an operation of the corresponding cable and the piece of operator information including a permitter ID of permitting the operation based on the piece of cable identification information read by the cable reading means;
collation means for outputting a piece of display permittance information in a case of comparing the operator ID stored to the first storage means with the permitter ID acquired by the operator information acquiring means to coincide with each other; and
display means for displaying the piece of acquired operation information by the operation information acquiring means by the piece of display permittance information from the collation means; and
wherein the server includes:
third storage means for storing the piece of assistance information of assisting the operation of each cable laid in the facility and the piece of operation information having the permitter ID with regard to the operation permitter in association with each piece of cable identification information;
extraction means for extracting, from the third storage means, the piece of operation information of the corresponding cable based on the piece of cable identification information received from the portable terminal; and
operation information providing means for providing the piece of operation information extracted by the extraction means to the portable terminal.

3. The cable construction assistance/management system according to Claim 1 or 2, wherein the cable laying cards are attached to both end portions of the cable, and the cable laying cards of the respective end portions are recorded with the pieces of cable identification information different from each other.

4. The cable construction assistance/management system according to any one of Claims 1 through 3, wherein the cable laying card is a card embedded with an RFID tag, or a card printed with a bar code, and the cable reading means of the portable terminal is an RFID tag reader or a bar code reader.

5. The cable construction assistance/management system according to any one of Claims 1 through 4, wherein the portable terminal inputs the piece of operator information by the operator reading means at least as a piece of authentification information of the operator for receiving a permittance of access to the server.

6. The cable construction assistance/management system according to Claim 5, wherein the piece of operator information of the operator is recorded to the RFID tag embedded to an operator authentification card of each operator, the RFID is integrated with a name display card pasted on a helmet owned by the operator, and the operator reading means is an RFID tag reader.

7. The cable construction assistance/management system according to Claim 5 or 6, wherein the portable terminal includes registration means for registering an end of the operation in correspondence with the piece of assistance information of the operation, and the piece of cable identification information, registration day and time, and the piece of operator information are uploaded to the server at the end of the operation by the registration means or when an uploading instruction is inputted.

8. The cable construction assistance/management system according to any one of Claims 1 through 7, wherein the piece of assistance information of the operation includes one or more of operations of pieces of information with regard to a cable cut-and-divide operation of cutting and dividing the cable of a designed length from a cable drum, a cable laying operation of laying the cut and divided cable along a designed route, a terminal processing operation of processing cable terminals at both ends of the laid cable to be able to be connected, a cable connection operation of connecting the cable terminal subjected to the terminal processing to a panel or a terminal board, and a checking operation of the connected cable.

9. The cable construction assistance/management system according to Claim 8, wherein the piece of assistance information with regard to the operation of cutting and dividing the cable includes a piece of information for specifying the cable and the design length of the cable.

10. The cable construction assistance/management system according to Claim 8 or 9, wherein the piece of assistance information with regard to the cable laying operation includes a piece of information of a route on which the cable is laid.

11. The cable construction assistance/management system according to any one of Claims 8 through 10, wherein the piece of assistance information with regard to the terminal processing operation, the cable connecting operation, and the checking operation includes a cable connection diagram.

12. The cable construction assistance/management system according to Claim 11, wherein the piece of assistance information with regard to the checking operation includes a check list.
